# EUROPEAN PATENT APPLICATION

(11) **EP 1 213 916 A1**
(43) Date of publication of application: **12.06.2002**
(21) Application number: 00204379.2
(22) Date of filing: 05.12.2000
(51) Int. Cl.: H04N 5/232

(54) **Digital camera with improved energy autonomy**

(71) Applicant: AGFA-GEVAERT, 2640 Mortsel (BE)
(72) Inventor: Pandelaers, Patrick, c/o Agfa-Gevaert N.V., 2640 Mortsel (BE)

(57) **Abstract**

A method for powering imaging hardware of a digital camera, and a digital camera (10) in which the method is implemented. At least a portion of the imaging hardware (21, 22, 23) is not powered any more as soon as a captured digital image is stored, so as to improve the energy autonomy of the camera (10) by saving energy.

## Description

### FIELD OF THE INVENTION

The present invention relates to the field of electronic imaging systems, and in particular to a digital electronic still camera.

### BACKGROUND OF THE INVENTION

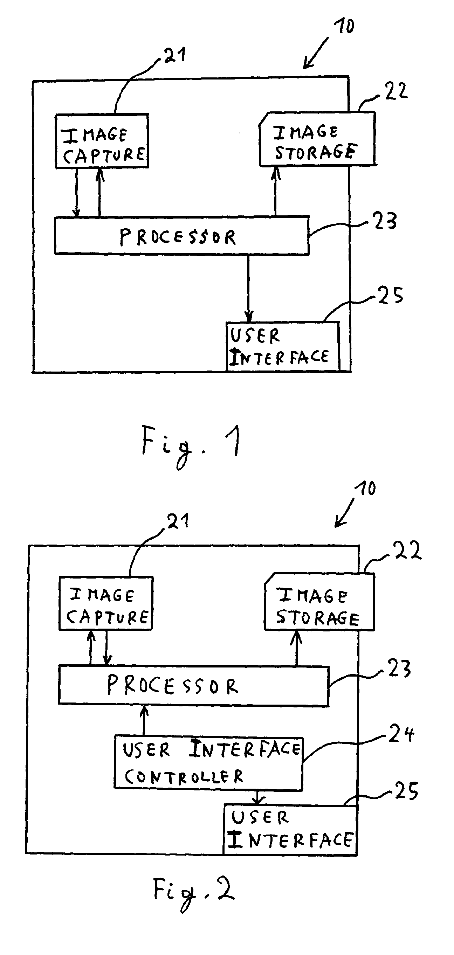

Fig. 1 is a general schematic diagram of a digital camera. The digital camera 10 includes an image capture device 21 - such as an electronic sensor - to capture image data, a processing device 23 to transform the captured image data into a digital image and an image storage device 22 to preserve the digital image. Typically, the image capture device 21 includes a charge-coupled device (CCD). Processing of the image data by processing device 23 may be implemented partly in software and partly in hardware. In many digital cameras, processing device 23 includes high performance image processing hardware to enhance and compress the image before it is stored. In Fig. 1, a powerful processor 23 controls the operation of the image capture device 21 and of the image storage device 22 and takes care of the image processing as well. Usually digital cameras have a user interface 25 such as an LCD (liquid crystal display) screen, which is also controlled by processor 23 in Fig. 1. Processor 23 requires a considerable amount of electrical energy, while the image capture device 21 and the image storage device 22 normally require electrical energy as well. Moreover, a digital camera may also have a flash unit, an automatic autofocus device, a picture display to view previously taken pictures, etc., that all consume electrical energy.

Such a digital camera 10 is operated as follows. The user operates the power switch of the camera. As a result, the image capture device 21, the image storage device 22, the processor 23 and the user interface 25 are powered and the user can take a picture. When the user presses the shutter button of the camera, the image capture device 21 captures image data, usually as analog signals that are converted into digital data. These digital data are enhanced and usually also compressed by processor 23 and subsequently stored by image storage device 22. Then, the digital camera 10 is ready for the next picture to be taken. Since the image processing by processor 23 may take quite some time, e.g. several seconds, the digital camera 10 may include an image buffer, as disclosed in patent **US-A-5 016 107**. The image buffer (not shown in Fig. 1) stores captured images before they are processed, so that the user does not have to wait for the processing of the previous image to be finished before he can take the next picture. After a picture is taken, the digital camera 10 remains powered so that the user can immediately take another picture. When the user does not take any pictures for some time, usually some 20 to 60 seconds, the digital camera goes into sleep mode. In sleep mode, only a portion of the camera is powered, e.g. user interface 25 and processor 23, in order to save energy. An action from the user, such as the user slightly touching the shutter button, wakes the camera, i.e. the image capture device 21 and the image storage device 22 are powered again. The user can now take the next picture.

Usually, one or more batteries provide the electrical energy for the digital camera. A problem is that such a digital camera has only limited energy autonomy. Experience shows that the batteries of even a simple digital camera such as the Agfa ePhoto CL18™, that has no picture display, have to be replaced about ten times as often as for a comparable APS camera with comparable batteries. APS stands for Advanced Photo System; APS cameras are conventional, film loaded cameras that are generally simple and easy to use.

### OBJECTS OF THE INVENTION

It is therefore an object of the present invention to provide a digital camera that has highly improved energy autonomy when compared with prior art digital cameras.

It is a further object of the invention to provide a method for co-operation of the parts of a digital camera that allows obtaining highly improved energy autonomy of the digital camera.

### SUMMARY OF THE INVENTION

The above-mentioned objects are realised by a digital camera and a method in accordance with the present invention as claimed in the independent claims. The dependent claims set out preferred embodiments of the invention.

In a preferred embodiment of a digital camera in accordance with the invention, at least a portion of the imaging hardware of the digital camera, and preferably as large a portion as possible, is only powered during the time that the concerned hardware is really operating on image data. An advantage is that such a digital camera consumes much less energy so that its energy autonomy is highly improved.

The imaging hardware as defined in this document includes all devices, hardware components, means, that are part of the digital camera, that require electrical power and that are used, either directly or indirectly, in obtaining the digital image that is produced by the camera. Examples of imaging hardware are image capture hardware, image processing hardware, an image storage device and control hardware for controlling the operation of one or more of these hardware components and devices. The control hardware is an example of imaging hardware that is indirectly used in obtaining the digital image.

The digital camera preferably contains control means that controls the operation of the imaging hardware. This control means may include control hardware, control software or a combination of both.

In a first embodiment of the invention, the control means of the digital camera is arranged to stop powering of a first portion of the imaging hardware immediately after the digital image is safely stored by the image storage device. This first portion of the imaging hardware preferably includes at least a portion of the image storage device; it may also include at least a portion or portions of the image capture hardware, of the image processing hardware, the of control hardware. Preferably, the image storage device is non-volatile so that, as soon as the digital image is safely stored, the image storage device does not require any electrical power to preserve the stored digital image. In a preferred embodiment, the complete image storage device, preferably also the complete image capture hardware, more preferably also the complete control hardware and most preferably also the image processing hardware are no longer powered as soon as the digital image is safely stored.

A second embodiment of the invention has the features of this first embodiment and moreover the control means of the digital camera is arranged to start powering of a second portion of the imaging hardware upon operation of the shutter activating means (e.g. the shutter button) of the camera. This second portion of the imaging hardware preferably includes at least a portion of the image capture hardware; it may also include at least a portion or portions of the image processing hardware, of the image storage device, of the control hardware. It is preferred that operation of the shutter activating means starts powering the complete image capture hardware, preferably also the complete image storage device, more preferably also the complete control hardware and most preferably also the image processing hardware. Remark: in starting powering the second portion of the imaging hardware upon operation of the shutter activating means, the operation of the camera is taken into account in order to save energy. Suppose e.g. that a picture with flash is being taken and that the digital camera is equipped with a pre-flash system to prevent the well-known "red eye" effect. Operation of the shutter activating means will then first give rise to one or more pre-flashes. Preferably, the image capture hardware is only powered after the pre-flashes, immediately before the shutter is opened.

In a highly preferred embodiment, the image capture hardware and the image storage device, preferably also the control hardware and more preferably also the image processing hardware are only powered upon operation of the shutter activating means until the digital image is safely stored.

A first method in accordance with the invention for powering imaging hardware of a digital camera comprises the following steps:
a. operating a shutter activator for initiating a capture of a digital image;
b. subsequently starting powering a portion "B" of the imaging hardware;
c. capturing the image data;
d. transforming the captured image data into a digital image;
e. storing the digital image;
f. subsequently immediately stopping powering a portion "F" of the imaging hardware.

Portion "B" of the imaging hardware preferably includes at least a portion of the image capture hardware and more preferably the complete image capture hardware; it may also include at least a portion or portions of the image processing hardware, the image storage device, the control hardware.

Portion "F" of the imaging hardware preferably includes at least a portion of the image storage device and more preferably the complete image storage device; it may also include at least a portion or portions of the image capture hardware, of the image processing hardware, of the control hardware. Preferably, the image storage device is non-volatile.

It is highly preferred that both portions "B" and "F" include the image capture hardware and the image storage device, preferably also the control hardware and more preferably also the image processing hardware.

A second method in accordance with the invention only comprises steps e and f.

Further advantages and embodiments of the present invention will become apparent from the following description and drawings.

### BRIEF DESCRIPTION OF THE DRAWINGS

The invention is described with reference to the following drawings without the intention to limit the invention thereto, and in which:
Fig. 1 is a general schematic diagram of a digital camera, applicable to a prior art digital camera and to a particular embodiment of a digital camera in accordance with the invention;
Fig. 2 is a schematic diagram of another embodiment of a digital camera in accordance with the invention.

### DETAILED DESCRIPTION OF THE INVENTION

Fig. 1 is a general schematic diagram of a digital camera. In the embodiment shown in Fig. 1, processor 23 contains control means to control the operation, including the timing, of the image capture device 21 and the image storage device 22. If the control means is arranged to stop powering a portion of the imaging hardware immediately after storage of the digital image, then the digital camera, of which Fig. 1 is a general schematic diagram, is in accordance with the present invention.

Another embodiment of the invention is now discussed with reference to Fig. 2. In this embodiment, processor 23 controls the operation of the image capture device 21 and of the image storage device 22, but does not control the user interface 25. Instead, the user interface 25 is controlled by a separate user interface controller 24. An advantage of this embodiment is that, as soon as the produced digital image is safely stored by the image storage device, powering of image hardware devices 21, 22 and 23 may be stopped, while the user interface controller 24 and the user interface 25 still receive electrical power. In this way, the user can still interact with the user interface. That imaging hardware devices 21, 22 and 23 do not receive any electrical power any more is thus invisible for the user. Preferably, the user interface does not include a picture display and is a simple colour LCD display, more preferably a black-and-white LCD display. The energy consumption of such a user interface 25 and of an associated user interface controller 24 is negligible when compared with the energy consumption of image hardware devices 21, 22 and 23. A digital camera according to this embodiment thus has a low energy consumption and high energy autonomy. As soon as the user operates the shutter activating means, image hardware devices 21, 22 and 23 are powered again so that the user can immediately take another picture.

In the embodiment shown in Fig. 2 and in the embodiment of Fig. 1 as well, the user interface 25 may be a cholesteric display, in colour or preferably in black-and-white. Cholesteric displays keep showing their information when electrical power is shut off; they are available e.g. from Kent Displays Inc., Ohio, USA. When using a cholesteric display, powering of processor 23 and of user interface 25, in the embodiment of Fig. 1, and additionally of user interface controller 24, in the embodiment of Fig. 2, may be stopped as soon as the produced digital image is safely stored by the image storage device 22. Although powering is stopped, the user still sees the information on the user interface 25.

In a digital camera 10 according to the invention, processor 23 in Fig. 1 and in Fig. 2 is preferably a basic processor that does not include high performance image processing hardware to enhance and compress the image before it is stored. Such a basic processor requires much less electrical power. In a preferred embodiment, the captured image data are converted from analog to digital form and the thus obtained digital data are stored without processing, i.e. as "raw data", by image storage device 22. This has the advantages of speed - no time is lost by processing - and of low energy consumption. Optionally, the image data are compressed before storage, preferably by lossless compression, which may be LUT (lookup table) based.

Image capture device 21 preferably includes an image sensor with integrated analog-to-digital conversion. Such an image capture device directly outputs a "raw" digital image. A raw digital image may be stored directly, without processing, by image storage device 22. If the data originating from the image capture device 21 are directly stored by image storage device 22, the transformation step between image capture and image storage, indicated as step "d" in the "Summary of the invention", is in fact the unity transformation. The transforming means implementing this transformation step may then simply be control hardware and/or software which controls the transfer of the data from the image capture device 21 to the image storage device 22.

Preferred types of image sensors are a CMOS sensor, such as an Agilent HDCS-2020 sensor, and a TFA (Thin Film on ASIC) sensor. TFA sensors are special chips in which an ultra-thin film sensor is put on top of an image processing ASIC. TFA sensors are developed by Silicon Vision, Siegen, Germany. These preferred types of image sensors have very low power consumption and allow a high level of integration. In a preferred embodiment, the image capture device 21 and the processor 23 are integrated on one single chip, resulting in lower cost and compact design. A digital camera has a.o. following control functions: initialisation, exposure control, picture capture command. Preferably, these functions are implemented in the control hardware of processor 23; this results in rapid image capture (e.g. less than 0,5 seconds).

Image storage device 22 may either by volatile (such as the Samsung SDRAM type K4S161622D) or, which is preferred, non-volatile. An example of a non-volatile image storage device is an SSFDC (Solid State Floppy Disk Card), such as a SmartMedia™ device (SmartMedia is a trademark of Toshiba Corp.). A SmartMedia™ device is a NAND-type Flash memory housed in a small removable card.

Image storage device 22 may be non-removable, such as a non-removable Flash EPROM internal memory, or removable, such as a SmartMedia™ device.

As discussed above, in a preferred embodiment of the invention, the imaging hardware of a digital camera is only powered in a period of time from the operation of the shutter activating means until the digital image is safely stored. In a particular embodiment of the invention, this time period may be e.g. two seconds or even less. The imaging hardware of such a digital camera may require a power of about 1 W or less (1 W is the power required by the prior art Agfa ePhoto CL18™ digital camera). The energy consumption per picture is then 1 W x 2 s = 2 J.

On the other hand, the imaging hardware of the prior art Agfa ePhoto CL18™ digital camera is powered during 30 seconds when the power switch is put in the "on" position or when a picture is taken; after 30 seconds, the CL18™ goes into sleep mode. The imaging hardware of the CL18™ requires about 1 W. Assuming that the user does not take two or more pictures in quick succession, the energy consumption per picture is thus 1 W x 30 s = 30 J, which is fifteen times as much as for the camera according to the invention discussed above. Thus, the camera according to the invention has highly improved energy autonomy.

Having described in detail preferred embodiments of the current invention, it will now be apparent to those skilled in the art that numerous modifications can be made therein without departing from the scope of the invention as defined in the appending claims.

### List of reference signs

- 10 :: digital camera
- 21 :: image capture device
- 22 :: image storage device
- 23 :: processor
- 24 :: user interface controller
- 25 :: user interface

## Claims

1. A digital camera (10) comprising electrically powerable imaging hardware (21, 22, 23) for producing a digital image and control means (23) for controlling the operation of the imaging hardware (21, 22, 23), the imaging hardware (21, 22, 23) including image storage means (22) for storing the digital image;
**characterised in that** said control means (23) is arranged to stop powering of a first portion (21, 22, 23) of said imaging hardware (21, 22, 23) immediately after storage of said digital image by said image storage means (22).

2. The digital camera (10) according to claim 1 wherein said image storage means (22) is non-volatile and wherein said first portion (21, 22, 23) comprises said non-volatile image storage means (22).

3. The digital camera (10) according to any one of the preceding claims, further comprising a shutter and means for activating the shutter, wherein said control means (23) is arranged to start powering of a second portion (21, 22, 23) of said imaging hardware (21, 22, 23) upon operation of said means for activating the shutter.

4. The digital camera (10) according to claim 3 wherein said imaging hardware (21, 22, 23) further comprises image capture means (21) for capturing image data and means (23) for transforming said image data into said digital image, and wherein said second portion (21, 22, 23) comprises said image capture means (21).

5. The digital camera (10) according to claim 4 when dependent on claim 2 wherein said first portion (21, 22, 23) further comprises said image capture means (21) and wherein said second portion (21, 22, 23) further comprises said non-volatile image storage means (22).

6. The digital camera (10) according to claim 4 or claim 5 wherein said image capture means (21) comprises an image sensor (21) with integrated analog-to-digital conversion.

7. The digital camera (10) according to the preceding claim, wherein said image sensor (21) is selected from the group of a CMOS sensor and a Thin Film on Asic sensor.

8. The digital camera (10) according to any one of the preceding claims, further comprising a user interface (25) and a user interface controller (24) for controlling said user interface (25), wherein said user interface controller (24) is different from said control means (23) for controlling the operation of the imaging hardware (21, 22, 23).

9. A method for powering imaging hardware (21, 22, 23) of a digital camera (10), the method comprising the steps of:
e. storing a digital image;
f. stopping powering at least a portion (21, 22, 23) of said imaging hardware (21, 22, 23) immediately after said step e.

10. The method according to the preceding claim, further comprising the steps of:
a. operating a shutter activator for initiating a capture of image data;
b. subsequently starting powering at least a second portion (21, 22, 23) of said imaging hardware (21, 22, 23);
c. subsequently capturing image data;
d. subsequently transforming said captured image data into said digital image;
wherein said step d precedes said step e.
